# EUROPEAN PATENT SPECIFICATION

(11) **EP 4 276 506 B1**
(45) Date of publication and mention of the grant of the patent: **11.02.2026**
(21) Application number: 22173307.4
(22) Date of filing: 13.05.2022
(51) Int. Cl.: G02B 6/44

(54) **ELASTIC DUCT BUNDLE**
ELASTISCHES KANALBÜNDEL
FAISCEAU DE CONDUITS ÉLASTIQUES

(43) Date of publication of application: 15.11.2023
(73) Proprietor: Hexatronic Cables & Interconnect Systems AB, 824 82 Hudiksvall (SE)
(72) Inventor: SKÄRGÅRD, Fredrik, 824 65 Näsviken (SE); LO CURZIO, Peter, 824 40 Hudiksvall (SE)
(74) Representative: Lind Edlund Kenamets Intellectual Property AB

(56) References cited:
- DE-A1- 4 116 591
- KR-U- 20110 000 206
- US-A- 5 480 203
- US-A1- 2005 194 578
- US-A1- 2021 341 695
- AFL ET AL: "eABF Fiber Optic Cable and MicroDuct Installation Manual", 1 January 2015 (2015-01-01), pages 1 - 110, XP055972080, Retrieved from the Internet <URL:https://www.unlv.edu/sites/default/files/page_files/182/EXHIBIT%20B_0.pdf> [retrieved on 20221017]

## Description

### TECHNICAL FIELD OF THE INVENTION

The present invention relates to a duct bundle for aggregating optical communication cables and a method for manufacturing said duct bundle.

### BACKGROUND OF THE INVENTION

In the field of telecommunication, an especially within the subfield of optical fiber communication, there is a need for drawing optical communication cables from e.g. a neighborhood distribution point to one or more buildings or from a building distribution point to one or more consumer units (e.g. provided in each of a plurality of apartments).

To enable efficient installation of long distance and high-capacity fiber optic communication a plurality of optical fibers may be bundled together to form optical communication cables which are suspended in the air or placed in trenches for below-ground implementations. In some cases, an optical communication cable is opened at one or more positions along its length whereby one or more optical fibers is extracted and branched-off to a target location while the remaining optical fibers remain inside the optical communication cable.

In some cases, multiple optical communication cables are bundled together by providing a surrounding jacket, a tape or a mesh material to hold the optical communication cables together. Accordingly, an optical communication cable may be branched-off in manner similar to the way an optical fiber is branched off from an individual optical communication cable. That is, an individual optical communication cable of a cable bundle may be accessed by opening the surrounding jacket and extracting a selected cable from the bundle. In e.g. US patent number 9,411,120 a breakout cable assembly including sixteen individual cables is proposed wherein the cables are arranged in a 4x4 array surrounded by a mesh sleeve (which is typically formed of a woven or braided polymeric material) that gathers the cables as a bundle. Another solution is presented in US patent application number 10/792,363 which shows a flexible innerduct guide tube assembly configured to contain a cable within a conduit. Yet another solution is presented in US patent number 5,480,203 which shows a pulling tool for gripping a cable, wherein the pulling tool has a mesh sleeve.

Alternatively, the optical communication cables may be routed through ducts wherein a single duct, or a plurality of ducts forming a duct bundle, is arranged as an aerial or below-ground installation. Duct bundles can also be used for installations in buildings. A duct bundle is provided with a solid jacket or held together tightly with cross-wound Kevlar threads or threads of other materials so as to form a stiff single unit which protects the cables routed inside the ducts.

A drawback with installing optical communication cables (or bundles thereof) directly or routing them through already installed ducts (or bundles thereof) is that the cables or ducts tend to become stiff an inflexible making them prone to breaking when installed below ground as the presence of sharp rocks and the pressure of the surrounding ground material puts a large strain on the cables or ducts. Additionally, the cables, and especially the duct bundles, are difficult to store and transport in a space efficient manner as they are stiff and prone to break or be damaged.

### SUMMARY OF THE INVENTION

To this end there is need for an improved arrangement for routing optical communication cables over long distances which overcomes at least the drawbacks described in the above.

A first aspect of the present invention relates to a duct bundle for aggregating optical communication cables. The duct bundle comprises a plurality of elongated ducts extending along a longitudinal direction, each duct having a bore extending through the duct and a smooth outer surface and at least one optical communication cable which is loose in the bore and extending through the bore of at least one duct. The duct bundle further comprises and a jacket surrounding the plurality of ducts so as to form a bundle of ducts, wherein the jacket is a mesh material comprising a plurality of mesh openings, and wherein the mesh material is elastic.

With an optical communication cable it is meant any type of cable which carries at least one optical fiber. An individual cable may comprise a plurality of optical fibers and/or may comprise a plurality of fiber-bundles which in turn comprises a plurality of optical fibers. A single optical communication cable may comprise a single optical fiber, tens of optical fibers or even hundreds of individual optical fibers and, optionally, one or more strength members to facilitate rigidity and resilience of the fiber optic cable. Optical communication cables often comprise one or more sleeves (such as a polymer sleeve) surrounding the one or more optical fibers and a filler material, such as an acrylate material or aramid material, which surrounds the one or more optical fibers to hold the optical fibers in place and make the cable more resistant to bending.

In addition, it is also noted that each optical fiber comprises a core, one or more cladding layers and optionally an outer sleeve layer.

With a duct it is meant an elongated hollow body which is stiff and rigid in comparison to optical communication cables which are meant to be housed loosely within the duct. A duct is configured to allow the insertion and removal of one or more optical communication cables while e.g. remaining installed below ground, suspended in an aerial installation or installed in an indoor environment. To this end, the bore of the ducts has an inner diameter which is greater than the outer diameter of the optical communication cable and enabling sufficient play to allow the optical communication cable to be inserted and removed (by e.g. pushing, pulling or air blowing).

With the mesh material being elastic it is meant that the mesh material may be deformed (e.g. stretched) so as to allow the cross-sectional shape of the duct bundle to be changed while the jacket remains intact. In some implementations, the jacket is biased towards an essentially circular cross-section meaning that, without external forces acting on the duct bundle, the ducts of the duct bundle will arrange themselves so as to form a substantially circular cross-section. At the same time, the jacket is elastic to allow the ducts to be displaced relative to each other so as to change the cross-sectional shape of the bundle.

The elastic jacket is elastically deformable meaning that the jacket may be deformed (by e.g. stretching or compression) while still being capable of returning to its original form. Preferably, the inner circumference of jacket is in its unstretched state smaller than the total circumference of all possible arrangements of the ducts contained therein, this means that the ducts of duct bundle will stretch the jacket and that the ducts are kept under a biasing force which biases the duct bundle towards a cross-sectional shape with the minimum circumference. In most situations, the cross-sectional shape which the duct bundle is biased against will be an approximately circular cross-sectional shape.

The invention is at least partially based on the understanding that by arranging a plurality of stiff ducts inside a mesh jacket a first beneficial effect is achieved as the resulting duct bundle will as such become flexible and allow its cross-sectional shape to be altered (e.g. around sharp rocks in below-ground installations or sharp corners in indoor installation environments) while each duct is stiff and defines a bore through which optical communication cables may be routed. For instance, the elastic property of the jacket allows the cross-sectional shape of the duct bundle to be deformed when wound in multiple layers on a drum which enhances the spatial efficiency of storage and transport, which in turn enables smaller warehouses and fewer transports and all the benefits this entails (e.g. decreased emissions of greenhouse gases).

A second beneficial effect is that a mesh material also is much easier to deliberately open when an individual duct and/or optical communication cable of the duct bundle is to be accessed, for e.g. rerouting and splicing, without the mesh material unwinding on either side of the deliberately formed opening.

A third beneficial effect is that the duct bundle of the present invention enables easier and more reliable installation in e.g. trenches for below-ground installations as the duct bundle will be deformed so as to follow the shape and/or any sharp the corners of the trench or any objects present in the trench (e.g. rocks) which mitigates the strain placed on individual ducts and optical communication cables inside the ducts. For instance, the duct bundle may assume an approximately circular cross-sectional shape and be elastically deformed to a ribbon cross-sectional shape with the ducts being arranged in approximately one or more linear columns. Accordingly, the same duct bundle may be used regardless of whether the bundle is installed in a wide trench or a slit trench as the duct bundle may be deformed into a ribbon shape which is necessary for burial in slit trenches.

A fourth beneficial effect is that the duct bundle of the first aspect of the present invention enables the individual ducts of the bundle to be seen through the mesh openings. Accordingly, the ducts of the duct bundle may be marked (e.g. color coded) to allow a duct in the bundle to be identified prior to opening jacket, which e.g. has the benefit of allowing the jacket to be opened on a proper side for easy access to the desired duct.

In addition, it is noted that a mesh material uses inherently less material in comparison to non-flexible solid jackets which decreases the material needed for production and makes the duct bundle more sustainable in comparison to duct bundles with a solid jacket.

In some implementations, the mesh material comprises a plurality of separated material strands which cross each other at crossing points so as to form a net structure, wherein the strands are attached to each other at the crossing points.

That is, the size and shape of mesh opening may be changed as a result of the material strands stretching or relaxing but the crossing points between two material strands will remain as a fixed point between the material strands.

It is especially envisaged that the mesh material may comprise a plurality of separated material strands which cross each other at crossing points so as to form a net structure, wherein the strands are attached to each other at the crossing points and wherein the material strands are made of an inelastic material. Regardless of the elasticity of the mesh material the fact that the material strands are attached to each other at the crossing points means at least that the jacket is easier to open and uses less material (in comparison to solid jacket bundles), allows the ducts to be seen and identified from the outside of the jacket and eliminates the risk of the jacket unwinding once a deliberate opening is formed to e.g. branch off one or more ducts.

In some implementations, the mesh material (the material strands) is a polymer material and e.g. comprises or consists of polyethylene or nylon. These materials are merely two examples of many materials which are elastic, and preferably meltable to enable fusing, which constitutes a suitable material choice for the mesh material.

In some implementations an inner surface of the bore of each duct is provided with longitudinal grooves. This lowers the contact area between the communication cable and the duct which facilitates the insertion or extraction of an optical communication cable by pushing or pulling.

The outer surface of the ducts, on the other hand is preferably kept smooth so as to enable the ducts to slide relative to each other inside the jacket.

Thus, the ducts are easily slid around each other inside the jacket without causing excessive strain on the ducts and/or the jacket. For instance, the ducts may be sufficiently smooth such that they are arranged automatically by the jacket in e.g. an essentially circular shape when no external forces are acting on the duct bundle.

It is envisaged that by selecting different surface roughness and/or material for the ducts and jacket the force needed to deform the duct bundle will vary. Experiments have shown that manufacturing the ducts from a polymer material such as medium density polyethylene, MDPE, or high density polyethylene, HDPE, with a smooth surface makes a duct bundle which is flexible and easy to deform.

According to a second aspect of the invention there is provided a method for manufacturing a duct bundle for aggregating optical communication cables. The method comprises the steps of providing a plurality of elongated ducts extending along a longitudinal direction, each duct having a bore extending through the duct and providing at least one optical communication cable. The method further comprises routing the at least one optical communication cable through the bore of at least one duct and applying a jacket around the plurality of ducts. Wherein the jacket surrounds the plurality of ducts so as to form a bundle of ducts, and wherein the jacket is elastic and made from a mesh material comprising a plurality of mesh openings extending through the jacket.

In this way, a duct bundle with all the benefits mentioned in the above may be formed from two or more ducts. Additionally, it is noted that the step of routing the at least one communication cable through at least one of the ducts may occur prior to or after the step of applying the jacket. The optical communication cables may even be routed (e.g. by means of pulling or pushing) the duct bundle has been formed and placed in a trench.

Commonly, the jacket is applied at a production site whereby the duct bundle is rolled onto a drum for transportation to an installation site where the duct bundle is used for below-ground, indoor or aerial installation. However, as the jacket does not necessitate much material or an overly complicated application procedure it is also envisaged that the jacket may be applied in the field (at the installation site), e.g. in immediate connection to the duct bundle being placed in a trench, suspended as an aerial installation or installed in an indoor environment.

Alternatively, it is envisaged that the jacket is placed so as to surround a funnel (e.g. rolled-up as torus shaped roll surrounding the funnel) whereby the jacket is moved off the funnel, and onto the plurality of ducts which are passed through the funnel. Depending on e.g. the rate at which the jacket is allowed to come of the funnel versus the rate at which the ducts are passed through the funnel the tightness of the jacket around the ducts may be adjusted.

In some implementations of the second aspect of the invention, the mesh material is a polymer material and the step of applying the jacket around the plurality of ducts comprises extruding the mesh material onto the ducts.

As duct bundles may be very long, exceeding hundreds of meters or even several kilometers in length, it is difficult to first manufacture the jacket and subsequently pull the jacket over the ducts. To this end, it is preferable to form the jacket around the ducts, e.g. by extruding material strands around the ducts wherein the material strands are fused at the crossing points.

The invention according to the second aspect features the same or equivalent benefits as the invention according to the first aspect. Any functions described in relation to the method, may have corresponding features in the duct bundle and vice versa.

### BRIEF DESCRIPTION OF THE DRAWINGS

The present invention will be described in more detail with reference to the appended drawings, showing currently preferred embodiments of the invention.
Figure 1 illustrates a cross-sectional view of a duct bundle according to some implementations of the invention.
Figure 2 illustrates a cross-sectional view of the same duct bundle according to some implementations of the invention, wherein the ducts have been rearranged inside the elastic jacket to form one or two columns.
Figure 3 depicts the mesh material of the jacket according to some implementations.
Figure 4 depicts profile view of the duct bundle and jacket according to some implementations.
Figure 5 is a flowchart describing a method for manufacturing a duct bundle according to some implementations.
Figure 6a-b depict how the duct bundle according to some implementations can be deformed when installed in a trench.

### DETAILED DESCRIPTION OF CURRENTLY PREFERRED EMBODIMENTS

In the following detailed description preferred embodiments of the invention will be described. However, it is to be understood that features of the different embodiments are exchangeable between the embodiments and may be combined in different ways, unless anything else is specifically indicated.

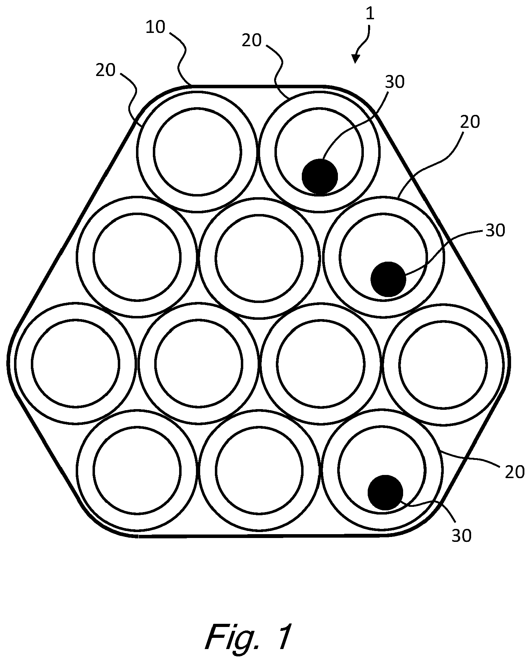

Fig. 1 depicts schematically a cross-sectional view of a duct bundle 1 comprising a plurality of ducts 20. In the exemplary embodiment of fig. 1, the duct bundle 1 comprises twelve ducts 20, however the duct bundle 1 may comprise any number of ducts 20 as long as there are at least two ducts 20. Accordingly, in some implementations the duct bundle 1 comprises, three, four, seven, twelve, nineteen, twenty-four or more ducts. While any number of ducts 20 is possible, four, seven, twelve, nineteen or twenty-four ducts 20 are examples of preferred numbers of ducts 20 as with any of these numbers of ducts 20 the cross-sectional shape of the duct bundle 1 will be biased towards a symmetrical and approximately round shape by the elastic jacket 10.

As seen in fig. 1 twelve ducts 20 may be automatically arranged by the jacket 10 into a hexagonal shape with rounded corners when no external forces are acting on the duct bundle 1. Once the duct bundle 1 is subjected to e.g. a compressive force or forced to sneak around a sharp corner the ducts 10 inside the duct bundle will rearrange themselves, which alters the cross-sectional shape, to minimize mechanical stresses on the jacket 10 and ducts 20. Similarly, a duct bundle 1 with three ducts 20 may biased towards a triangular shape and four ducts 20 towards a square shape etc.

The plurality of ducts 20 are held together so as to form a duct bundle 1 by the jacket 10. The jacket 10 consists of an elastic mesh material which can be elastically deformed so as to e.g. follow the outer contour of the ducts 20 as shown in fig. 1. In some implementations, the jacket 10 is arranged sufficiently tight around the ducts 20 so as to bias the ducts 10 towards an arrangement which is substantially circular in its cross-section while still allowing the ducts 10 to move relative each other. In some implementations, the jacket 10 enables the duct bundle 1 to be deformed to assume a different shape while the jacket 10 remains intact.

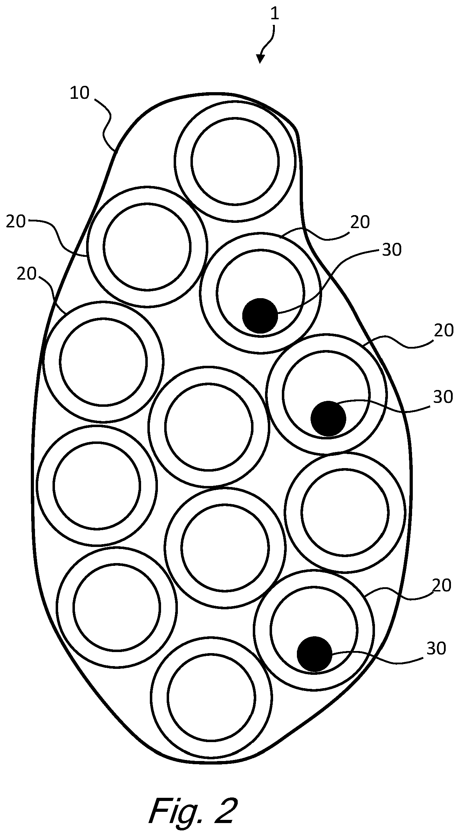

In fig. 2 the duct bundle 1 from fig. 1 has been deformed to a shape different from the substantially circular shape into an irregular shape with an approximately elliptical cross-sectional shape or elongated cross-sectional shape. As seen in fig. 2, the twelve ducts 20 have been arranged in approximately side-by-side in approximately one, two or three columns. It is understood that the elastic jacket 10 allows the cross-sectional shape of the duct bundle to assume many possible shapes. For instance, the duct bundle 1 may be compressed to a ribbon shape with the ducts 20 arranged approximately in two or three columns which allows the duct bundle 1 to be placed in a narrow space, such a slit trench.

Each duct 20 is preferably a tube with an outer diameter and inner bore diameter. The outer diameter may be between 2 millimeters and 50 millimeters, preferably between 3 millimeters and 25 millimeters, and most preferably between 7 millimeters and 16 millimeters. The inner bore diameter may be between 2 millimeters and 40 millimeters, preferably between 3.5 millimeters and 20 millimeters, and most preferably between 3.5 millimeters and 12 millimeters. For instance, each duct 20 may have an outer diameter of 25 millimeters and an inner bore diameter of 20 millimeters, meaning that each duct 20 has a thickness of 5 millimeters. Additionally, it is envisaged that all ducts 20 of the bundle are not necessarily of the same size and ducts 20 with different inner and/or outer diameters may be provided in the same duct bundle 1.

The outer shape of the ducts 20 is preferably circular although it is envisaged that other shapes may be used. Similarly, the shape of the inner bore of the ducts 20 is preferably circular while it is envisaged that also the bore shape may be non-circular.

The ducts 20 are preferably made of a polymer material, such as polyethylene and preferably high density polyethylene (HDPE).

At least one of the ducts 20 further comprises at least one optical communication cable 30 extending through the bore of the duct 20. The optical communication cable 30 may be any type of optical communication cable 30. It is also understood that more than one optical communication cable 30 may be present in a single duct 20. Each communication cable 30 comprises at least one, and preferably two or more, optical fibers wherein each optical fiber is configured for optical communication.

The optical communication cable 30 may be any type of cable such as a breakout cable, loose tube cable, tight-buffered cable or hybrid cable (comprising one or more optical fibers for optical communication and at least one electrical conductor for transfer of electrical power). The optical communication cable 30 comprises at least one optical fiber which is surrounded by a cable covering material. In many cases, the optical communication cable 30 comprises at least two optical fibers, encased in a buffer material or surrounded by an individual jacket, wherein the cable covering material surrounds the buffer material or the individual jackets of the optical fibers.

In one implementation, the optical communication cable 30 is what is sometimes referred to as a "micro cable" which e.g. comprises a cable sheath of a polymer material (such as polyethylene or polyamide) surrounding one or more fiber-units. Each fiber- unit having a polymer tube surrounding one or more loose optical fibers (such as four, twelve or twenty-four fibers), wherein each optical fiber is encased in an individual acrylate buffer. Optionally, the micro cable is also provided with a central strength member (such as fiberglass reinforced plastic) and/or the fiber-units are separated from the mantle, and each other, with a layer of aramid yarns.

Alternatively, the optical communication cable 30 may be a cable suitable for air blown installation. In one such implementation, the optical communication cable comprises a cable sheath of a polymer material which surrounds one or more optical fibers embedded together in an UV-curated acrylate material. A cable sheath of a polyethene material is especially suitable as this enables low friction when blowing the fiber unit through ducts made of polyethylene, such as HDPE.

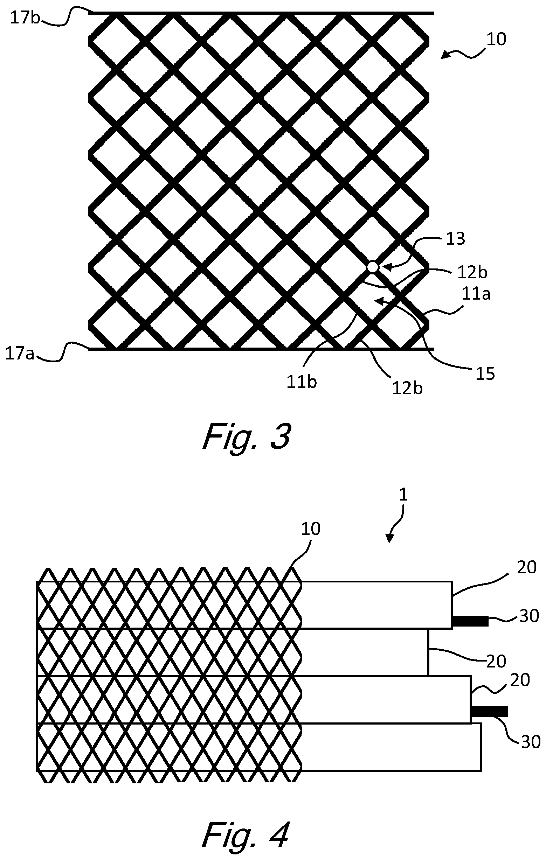

Fig. 3 illustrates the mesh (or net-like) material of the jacket 10. It is understood that the mesh material comprises a plurality of mesh openings 15 wherein the mesh openings 15 may be of different sizes although preferably the mesh openings 15 are preferably of the same size.

In the embodiment shown, the mesh material is formed by a plurality of material strands 11a, 11b, 12a, 12b which cross each other at crossing points 13. Thus, each mesh opening 15 is delimited by four material strands 11a, 11b, 12a, 12b which extend between, and are attached at, four crossing points 13.

In the implementation shown in fig. 3, a plurality of first material strands 11a, 11b extend in parallel, with a first separation distance, along a first direction and a plurality of second material strands 12a, 12b extend in parallel, with a second separation distance, along a second direction wherein the first and second direction are perpendicular and the first and second separation distance are equal. This gives rise to mesh openings with a square shape, however, it envisaged that the first material strands 11a, 11b and second material strands 12a, 12b may intersect at a different, non-perpendicular angle so as to give rise to rhombus shaped mesh openings 15 and/or that the first and second separation distances may be different from each other so as to give rise to e.g. rectangular mesh openings 15 with a short and long edge.

Furthermore, it is understood that the material strands 11a, 11b, 12a, 12b may have another shape, and e.g. comprise sinusoid shaped or rounded portions, so as to enable the shape of the mesh openings 15 to be rounded. In some implementations, the shape of the mesh openings 15 is polygonal, comprising three, four, five, six or more crossing points 13. For instance, the mesh openings 15 may be in the shape of parallelograms, trapezoids or kites.

Regardless of the shape of the mesh openings 15 which is formed by the material strands 11a, 11b, 12a, 12b it is understood that the material strands are attached to each other at the crossing points. For instance, the material strands are made of a meltable material (such as a plastic material) allowing the material strands to be melted and fused together at the crossing points 13. Alternatively, the mesh material of the jacket 10 is made as a single tubular piece or as a sheet, wherein two opposite sides 17a, 17b of the sheet are attached (e.g. melted together to form a tubular shape).

In some implementations, a dimension of the mesh openings 15 in the jacket 10, (e.g. the largest diameter of the mesh openings 15) is between 1 millimeter and 8 centimeters, preferably 1 millimeter and 4 centimeters, and most preferably between 0.5 centimeters and 2.5 centimeters. The material strands 11a, 11b, 12a, 12b may have a largest diameter of less than 2 centimeters, preferably less than 1 centimeter and most preferably less than 0.5 centimeters. The dimension of the mesh openings 15 and the thickness of the material strands 11a, 11b, 12a, 12b may be adjusted so as to modify the elasticity of the jacket 10. For instance, larger mesh openings 15 and/or thinner material threads will give a more stretchable jacket 10 and vice versa.

It is envisaged that the material strands 11a, 11b, 12a, 12b may be attached to each other at the crossing points 13 by means other than fusing. For example, the material strands 11a, 11b, 12a, 12b may be tied together or held together with the aid of a fastener, such as a staple. The strands can also be knot together in weaving process. Regardless of the manner in which the material strands 11a, 11b, 12a, 12b are attached to each other at the crossing points 13, it is understood that the mesh material is not merely cross-wound material strands as simply winding material strands 11a, 11b, 12a, 12b on top of each other (e.g. winding a material strand in the first direction and then winding a material strand in the second direction) does not result in the material strands 11a, 11b, 12a, 12b being attached at their crossing points 15.

Fig. 4 depicts a duct bundle 1 held together with the jacket 10 wherein at least one of the ducts 20 also contains an optical communication cable 30 extending through the bore of the duct 20.

The mesh material of the jacket 10 may be made (e.g. extruded onto the ducts 20) with the rhombus mesh opening shape shown in fig. 4. Alternatively, the rhombus shape of the mesh openings in the mesh material of the jacket 10 may be the result of subjecting the mesh material from fig. 3 to a tension force arising e.g. from a pressure exerted on the bundle of ducts.

For instance, the rhombus shape may be the result of pressing the ducts 20 of the bundle to align themselves in a column structure which stretches the elastic material strands 11a, 11b, 12a, 12b resulting in a deformation of the mesh openings 15. Once the pressure is released the bundle of ducts 20 may revert to an approximately circular arrangement whereby the mesh material reverts to its original shape, with less tension, allowing the mesh openings 15 to revert to their original square shape.

From the side view of the duct bundle 1 shown in fig. 4 it is evident that the jacket 10 enables easy access to one or more of the ducts 20 at any position along the duct bundle 1, which e.g. facilitates the branching-off procedure wherein one or more ducts 20 in the duct bundle 1 is branched off from the other ducts. With the elastic mesh material forming the jacket 10 one or more material strands of the mesh materials can be cut, e.g. by placing a knife incision along the longitudinal axis of the duct bundle 1, so as to form an opening in the jacket 10. The opening is large in comparison to the mesh openings and allows one or more ducts 20 to be pulled out.

The jacket 10 is much easier to open in comparison to a solid jacket and may even be teared open by hand which facilitates the branching-off procedure. Additionally, as the mesh material of the jacket 10 allows the ducts 20 to be partially seen from the outside of the jacket 10 it is possible to identify where in the duct bundle 1 a desired duct 20 is located prior to opening jacket 10, allowing the opening to be formed on a correct side of the duct bundle 1 to reach the desired duct 20. To this end, the individual ducts 20 of the duct bundle 1 may be uniquely marked (e.g. with a color or symbol) along its length to allow the ducts 20 to be distinguished from each other at any point along the duct bundle 1.

At the same time, as the material strands of the mesh material are attached to each other at the crossing points the structure of the mesh material will remain on either side of the deliberately formed, comparatively large, opening. Accordingly, any problem with the jacket 10 unwinding on either side of the deliberately formed opening is eliminated.

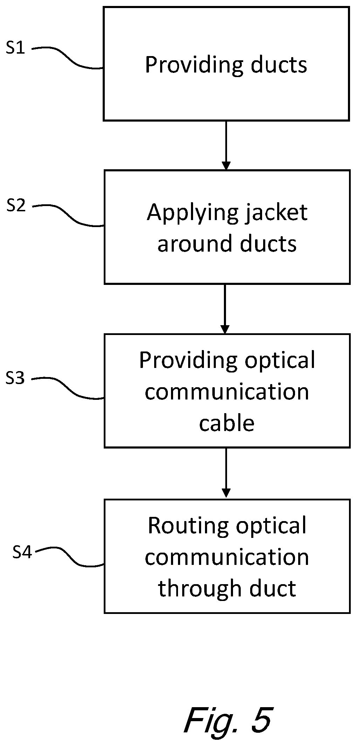

With further reference to fig. 5, there is depicted a flowchart illustrating a method for manufacturing a duct bundle 1. At step S1 a plurality of ducts 20 are provided. Each duct may e.g. be rolled off an individual drum and fed through an aperture.

At step S2 the elastic jacket 10 is applied around the ducts 20 to hold the ducts 20 of the duct bundle 1 together. The jacket 10 may be applied by extruding material strands along the ducts 20 while ensuring that the material strands become attached to each other their crossing points (or at least some of the crossing points). For instance, the material strands may still be heated from the extrusion process when they come into contact at the crossing points which enables the material strands to fuse together at the crossing points when the material strands cool.

At step S3 at least one optical communication cable 30 is provided, also the optical communication 30 may be rolled of a storage drum

At step S4 the optical communication cable 30 is routed through at least one duct 20 in the duct bundle 1 and, in some implementations, at least one optical communication cable is routed through each duct 20 in the duct bundle 1. Step S4 may be performed prior to or after the duct bundle 1 has been buried in a trench.

In some implementations, step S1 and S2 is performed at a production site, wherein the duct bundle 1 is rolled up to a storage drum. Later, step S3 and S4 are performed at the installation site. It is also envisaged that all steps S1, S2, S3, S4 are performed at the installation site. For instance, multiple drums carrying ducts 20 are transported to the installation site where the jacket 10 is applied, to form the duct bundle 1, which is installed in trench, routed through an indoor environment or suspended as an aerial installation. Once the duct bundle 1 is installed, step S3 and S4 are carried out.

It is envisaged that extruding the mesh material may comprise extruding using two concentric extruders which are rotated in opposite directions (or in a same direction with different angular velocities) around the plurality of bundles being fed through the center of the two concentric extruders. Each extruder outputs at least one material strand and, due to the extruders rotating in opposite directions (or in a same direction with different angular velocities) the material strands will form crossing points, and by attaching the material strands to each other at the crossing points the mesh material is formed.

Additionally, it is understood that step S3 and S4 may occur prior to or after step S2, meaning that the optical communication cables 30 may be provided and routed through one or more ducts 20 of the duct bundle 1 prior to or after the jacket 10 has been applied.

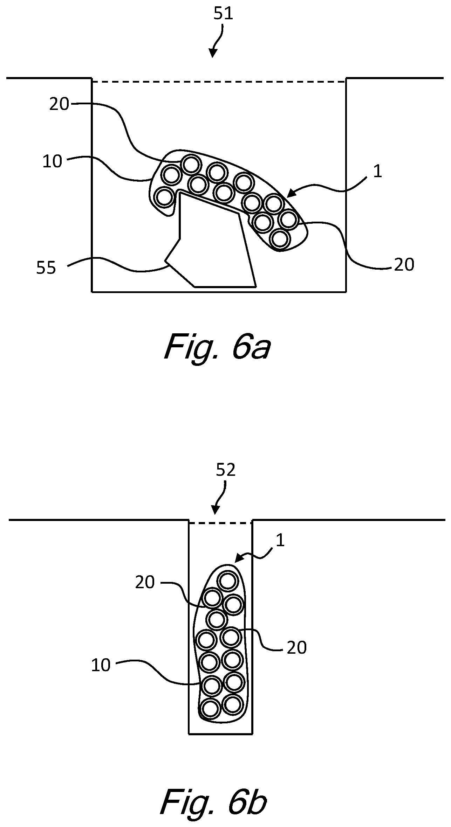

Fig. 6a shows a cross-sectional view of a trench 51 created for routing a duct bundle 1. The trench 51 may comprise sharp turns or sharp objects 55 (such as a rock) and, as illustrated in fig. 6a, the elastic mesh material of the jacket 10 allows the ducts 20 to move relative to each other and the cross-sectional shape of the duct bundle 1 to deform so as to follow the sharp turn or shape of the sharp object 55 which mitigates the strain on each duct 20. At the same time, the jacket 10 holds the ducts 20 together as a single bundle 1 which makes the ducts 20 easy to install and to locate again once the trench 51 has been filled. If a plurality of loose ducts were to be laid directly into the trench 51 they may be separated by sharp objects which makes them more difficult to locate in comparison with ducts held together with the jacket 10. It will also be more time consuming to install since several cable drums need to be handled.

Fig. 6b illustrates how the duct bundle 1 may alternatively be placed in a slit trench 52, wherein the slit trench 52 is narrow in comparison to the trench 51 from fig. 6a. Usually, to enable installation of duct bundles 1 in a slit trench 52 a solid ribbon jacket is formed around the ducts so as to rigidly align the ducts in one or more columns and thereby provide an elongated duct bundle 1 which is suitable for installation within a slit trench 52. A solid ribbon bundle, however, is difficult to wind on a drum with high spatial efficiency and requires much material.

With the elastic jacket 10, however, the duct bundle 1 can be deformed to assume essentially a ribbon shape (with the ducts aligned substantially in one or more columns) to enable installation in slit trenches 52. Accordingly, the duct bundle 1 is suitable for installation in any type of trench 51, 52 (including slit trenches 52) and allows for winding on a drum with high spatial efficiency.

The person skilled in the art realizes that the present invention by no means is limited to the preferred embodiments described above. On the contrary, many modifications and variations are possible within the scope of the appended claims. For example, the method for manufacturing a duct bundle 1 may be comprise the steps of extruding the jacket 10 onto a plurality of ducts 20 or pulling a plurality of ducts 20 through a rolled-up jacket 10, in direction connection to the duct bundle 1 being placed in a trench. Accordingly, a first portion of the duct bundle 1 may be placed in a trench while at a second portion the jacket 10 is applied.

## Claims

1. A duct bundle (1) for aggregating optical communication cables (30) comprising:
a plurality of elongated ducts (20) extending along a longitudinal direction, each duct having a bore extending through the duct (20) and a smooth outer surface,
at least one optical communication cable (30) which is loose in the bore and extending through the bore of at least one duct (20), and
a jacket (10) surrounding said plurality of ducts (20) so as to form a bundle of ducts, wherein said jacket (10) is a mesh material,
**characterized by** the mesh material comprising a plurality of mesh openings (15), and wherein said mesh material is elastic.

2. The duct bundle (1) according to claim 1, wherein the mesh material comprises a plurality of separated material strands (11a, 11b, 12a, 12b) which cross each other at crossing points so as to form a net structure, wherein the strands (11a, 11b, 12a, 12b) are attached to each other at the crossing points.

3. The duct bundle (1) according to claim 2, wherein the material strands (11a, 11b, 12a,12b) consist of a meltable material, and wherein the strands (11a, 11b, 12a, 12b) are fused at the crossing points.

4. The duct bundle (1) according to any of the preceding claims, wherein a dimension the mesh openings (15) in the jacket (10) is between 1 millimeter and 4 centimeters or preferably between 0.5 centimeters and 2.5 centimeters.

5. The duct bundle (1) according to any of the preceding claims,
wherein an outer diameter of the ducts (20) is between 2 millimeters and 25 millimeters, and preferably between 7 millimeters and 16 millimeters, and
wherein a diameter of the bore is between 3.5 millimeters and 16 millimeters, and preferably between 3.5 millimeters and 12 millimeters.

6. The duct bundle (1) according to any of the preceding claims, wherein the ducts (20) are made of a polymer material such as high density polyethylene, HDPE.

7. The duct bundle (1) according to any of the preceding claims, wherein the mesh material is a polymer material.

8. The duct bundle (1) according to claim 7, wherein the mesh material comprises at least one of polyethylene and Nylon.

9. The duct bundle (1) according to any of the preceding claims, wherein the optical communication cable (30) comprises one or more optical fibers surrounded by at least one covering material.

10. The duct bundle (1) according to claims 9, wherein the optical communication cable (30) is an air blown cable, comprising one or more optical fibers surrounded by at least one covering material.

11. The duct bundle (1) according to any of the preceding claims, wherein an inner surface of the bore is provided with longitudinal grooves.

12. The duct bundle (1) according to any of the preceding claims, wherein an outer surface of each of said plurality of ducts (20) is smooth, enabling the ducts (20) to move relative to each other inside the jacket (10).

13. A method for manufacturing a duct bundle (1) for aggregating optical communication cables (30), the method comprising:
providing (S1) a plurality of elongated ducts (20) extending along a longitudinal direction, each duct (20) having a bore extending through the duct;
applying (S2) a jacket (10) around said plurality of ducts (20), wherein said jacket (10) surrounds said plurality of ducts (20) so as to form a bundle (1) of ducts, and wherein said jacket (10) is made of a mesh material;
providing (S3) at least one optical communication cable (30); and
routing (S4) said at least one optical communication cable (30) through the bore of at least one of said ducts (20),
**characterized in that** said mesh material is elastic and comprises a plurality of mesh openings (15).

14. The method according to claim 14, wherein said mesh material is a polymer material and wherein applying said jacket (10) around said plurality of ducts (20) comprises extruding said mesh material onto said ducts (20).

## Patentansprüche

1. Kanalbündel (1) zum Zusammenführen von optischen Kommunikationskabeln (30), aufweisend:
mehrere längliche Kanäle (20), die sich entlang einer Längsrichtung erstrecken, wobei jeder Kanal eine Bohrung, die sich durch den Kanal (20) erstreckt, und eine glatte Außenfläche aufweist,
mindestens ein optisches Kommunikationskabel (30), das lose in der Bohrung liegt und sich durch die Bohrung mindestens eines Kanals (20) erstreckt, und
einen Mantel (10), der die mehreren Kanäle (20) umschließt, um ein Kanalbündel zu bilden, wobei der Mantel (10) ein Netzmaterial ist,
**dadurch gekennzeichnet, dass** das Netzmaterial mehrere Netzöffnungen (15) aufweist, und wobei das Netzmaterial elastisch ist.

2. Kanalbündel (1) nach Anspruch 1, wobei das Netzmaterial mehrere getrennte Materialstränge (11a, 11b, 12a, 12b) aufweist, die sich an Kreuzungspunkten kreuzen, um eine Netzstruktur zu bilden, wobei die Stränge (11a, 11b, 12a, 12b) an den Kreuzungspunkten aneinander befestigt sind.

3. Kanalbündel (1) nach Anspruch 2, wobei die Materialstränge (11a, 11b, 12a, 12b) aus einem schmelzbaren Material bestehen, und wobei die Stränge (11a, 11b, 12a, 12b) an den Kreuzungspunkten verschmolzen sind.

4. Kanalbündel (1) nach einem der vorhergehenden Ansprüche, wobei eine Abmessung der Netzöffnungen (15) im Mantel (10) zwischen 1 Millimeter und 4 Zentimeter oder bevorzugt zwischen 0,5 Zentimeter und 2,5 Zentimeter beträgt.

5. Kanalbündel (1) nach einem der vorhergehenden Ansprüche,
wobei ein Außendurchmesser der Kanäle (20) zwischen 2 Millimetern und 25 Millimetern, bevorzugt zwischen 7 Millimetern und 16 Millimetern, liegt, und
wobei der Durchmesser der Bohrung zwischen 3,5 Millimetern und 16 Millimetern und bevorzugt zwischen 3,5 Millimetern und 12 Millimetern liegt.

6. Kanalbündel (1) nach einem der vorhergehenden Ansprüche, wobei die Kanäle (20) aus einem Polymermaterial wie hochdichtem Polyethylen (HDPE) hergestellt sind.

7. Kanalbündel (1) nach einem der vorhergehenden Ansprüche, wobei das Netzmaterial ein Polymermaterial ist.

8. Kanalbündel (1) nach Anspruch 7, wobei das Netzmaterial mindestens eines von Polyethylen und Nylon aufweist.

9. Kanalbündel (1) nach einem der vorhergehenden Ansprüche, wobei das optische Kommunikationskabel (30) einen oder mehrere Lichtwellenleiter aufweist, die von mindestens einem Abdeckmaterial umschlossen sind.

10. Kanalbündel (1) nach Anspruch 9, wobei das optische Kommunikationskabel (30) ein luftgeblasenes Kabel ist, das einen oder mehrere Lichtwellenleiter aufweist, die von mindestens einem Abdeckmaterial umschlossen sind.

11. Kanalbündel (1) nach einem der vorhergehenden Ansprüche, wobei eine Innenfläche der Bohrung mit Längsnuten versehen ist.

12. Kanalbündel (1) nach einem der vorhergehenden Ansprüche, wobei eine Außenfläche jedes der mehreren Kanäle (20) glatt ist, sodass sich die Kanäle (20) im Inneren des Mantels (10) relativ zueinander bewegen können.

13. Verfahren zum Herstellen eines Kanalbündels (1) zum Bündeln von optischen Kommunikationskabeln (30),
das Verfahren umfassend:
Bereitstellen (S1) mehrerer länglicher Kanäle (20), die sich entlang einer Längsrichtung erstrecken, wobei jeder Kanal (20) eine Bohrung aufweist, die sich durch den Kanal erstreckt;
Anbringen (S2) eines Mantels (10) um mehrere Kanäle (20), wobei der Mantel (10) die mehreren Kanäle (20) umschließt, um ein Bündel (1) von Kanälen zu bilden, und wobei der Mantel (10) aus einem Netzmaterial hergestellt ist;
Bereitstellen (S3) von mindestens einem optischen Kommunikationskabel (30); und
Verlegen (S4) des mindestens einen optischen Kommunikationskabels (30) durch die Bohrung von mindestens einem der Kanäle (20),
**dadurch gekennzeichnet, dass** das Netzmaterial elastisch ist und mehrere Netzöffnungen (15) aufweist.

14. Verfahren nach Anspruch 14, wobei das Netzmaterial ein Polymermaterial ist und wobei das Anbringen des Mantels (10) um die mehreren Kanäle (20) das Extrudieren des Netzmaterials auf die Kanäle (20) umfasst.

## Revendications

1. Faisceau de conduits (1) destiné à agréger des câbles de communication optique (30), comprenant :
une pluralité de conduits allongés (20) s'étendant le long d'une direction longitudinale, chaque conduit ayant un alésage s'étendant à travers le conduit (20) et une surface extérieure lisse,
au moins un câble de communication optique (30) lâche dans l'alésage et s'étendant à travers l'alésage d'au moins un conduit (20), et
une chemise (10) entourant ladite pluralité de conduits (20) de manière à former un faisceau de conduits, ladite chemise (10) étant un matériau à mailles,
**caractérisé en ce que** le matériau à mailles comprend une pluralité d'ouvertures de mailles (15), et ledit matériau à mailles étant élastique.

2. Faisceau de conduits (1) selon la revendication 1, dans lequel le matériau à mailles comprend une pluralité de brins de matériau séparés (11a, 11b, 12a, 12b) qui se croisent mutuellement à des points de croisement de manière à former une structure en filet, les brins (11a, 11b, 12a, 12b) étant attachés les uns aux autres aux points de croisement.

3. Faisceau de conduits (1) selon la revendication 2, dans lequel les brins de matériau (11a, 11b, 12a, 12b) sont constitués d'un matériau fusible, et les brins de croisement (11a, 11b, 12a, 12b) sont fondus aux points de croisement.

4. Faisceau de conduits (1) selon l'une quelconque des revendications précédentes, dans lequel une dimension des ouvertures de mailles (15) dans la chemise (10) est comprise entre 1 millimètre et 4 centimètres ou de préférence entre 0,5 centimètre et 2,5 centimètres.

5. Faisceau de conduits (1) selon l'une quelconque des revendications précédentes,
dans lequel un diamètre extérieur des conduits (20) est compris entre 2 millimètres et 25 millimètres, et de préférence entre 7 millimètres et 16 millimètres, et
un diamètre de l'alésage est compris entre 3,5 millimètres et 16 millimètres, et de préférence entre 3,5 millimètres et 12 millimètres.

6. Faisceau de conduits (1) selon l'une quelconque des revendications précédentes, dans lequel les conduits (20) sont faits d'un matériau polymère tel que du polyéthylène à haute densité, du HDPE.

7. Faisceau de conduits (1) selon l'une quelconque des revendications précédentes, dans lequel le matériau à mailles est un matériau polymère.

8. Faisceau de conduits (1) selon la revendication 7, dans lequel le matériau à mailles comprend au moins un élément parmi le polyéthylène et le nylon.

9. Faisceau de conduits (1) selon l'une quelconque des revendications précédentes, dans lequel le câble de communication optique (30) comprend une ou plusieurs fibres optiques entourées par au moins un matériau de recouvrement.

10. Faisceau de conduits (1) selon la revendication 9, dans lequel le câble de communication optique (30) est un câble soufflé à l'air, comprenant une ou plusieurs fibres optiques entourées par au moins un matériau de recouvrement.

11. Faisceau de conduits (1) selon l'une quelconque des revendications précédentes, dans lequel une surface intérieure de l'alésage est pourvue de rainures longitudinales.

12. Faisceau de conduits (1) selon l'une quelconque des revendications précédentes, dans lequel une surface extérieure de chacun de ladite pluralité de conduits (20) est lisse, ce qui permet aux conduits (20) de se déplacer les uns par rapport aux autres à l'intérieur de la chemise (10).

13. Procédé de fabrication d'un faisceau de conduits (1) pour agréger des câbles de communication optiques (30), le procédé comprenant :
la prévision (S1) d'une pluralité de conduits allongés (20) s'étendant le long d'une direction longitudinale, chaque conduit (20) présentant un alésage s'étendant à travers le conduit ;
l'application (S2) d'une chemise (10) autour de ladite pluralité de conduits (20), ladite chemise (10) entourant ladite pluralité de conduits (20) de manière à former un faisceau (1) de conduits, et ladite chemise (10) étant faite d'un matériau à mailles ;
la prévision (S3) d'au moins un câble de communication optique (30) ; et
l'acheminement (S4) dudit au moins un câble de communication optique (30) à travers l'alésage d'au moins un desdits conduits (20),
**caractérisé en ce que** ledit matériau à mailles est élastique et comprend une pluralité d'ouvertures de mailles (15).

14. Procédé selon la revendication 14, dans lequel ledit matériau à mailles est un matériau polymère et dans l'application de ladite chemise (10) autour de ladite pluralité de conduits (20) comprend l'extrusion dudit matériau à mailles sur lesdits conduits (20).
